# EUROPÄISCHE PATENTSCHRIFT

(11) **EP 4 137 320 B1**
(45) Veröffentlichungstag und Bekanntmachung des Hinweises auf die Patenterteilung: **06.08.2025**
(21) Anmeldenummer: 22191346.0
(22) Anmeldetag: 19.08.2022
(51) Int. Cl.: B32B 38/18, B32B 37/18, B32B 37/08, B32B 41/00, B30B 15/30

(54) **VORRICHTUNG UND VERFAHREN ZUR DISKONTINUIERLICHEN HERSTELLUNG EINES LAMINATS AUS MEHREREN SUBSTRATEN**
DEVICE AND METHOD FOR DISCONTINUOUSLY PRODUCING A LAMINATE COMPOSED OF A PLURALITY OF SUBSTRATES
APPAREIL ET PROCÉDÉ DE FABRICATION DISCONTINUE D'UN STRATIFIÉ CONSTITUÉ DE PLUSIEURS SUBSTRATS

(30) Priorität: 19.08.2021 DE 102021004251
(43) Veröffentlichungstag der Anmeldung: 22.02.2023
(73) Patentinhaber: Dieffenbacher Maschinenfabrik GmbH, 75059 Zaisenhausen (DE)
(72) Erfinder: HAGNER, Ralf, 75059 Zaisenhausen (DE)
(74) Vertreter: Hartdegen, Helmut

(56) Entgegenhaltungen:
- EP-A1- 2 905 126
- US-A1- 2004 011 225

## Beschreibung

Die Erfindung betrifft eine Vorrichtung zur diskontinuierlichen Herstellung eines Laminats aus mehreren Substraten nach dem Patentanspruch 1. Die Erfindung betrifft weiter ein Verfahren zur diskontinuierlichen Herstellung eines Laminats aus mehreren Substraten nach dem Patentanspruch 13.

Unter Laminaten versteht man üblicherweise einen Schichtaufbau aus gleichen oder diversen Substraten, welche nach einer Verpressung, bevorzugt unter Einfluss von Wärme, verklebt oder verschmolzen sind. Beispiele für Laminierungen sind in Kunststofftaschen gehülltes Papier, aber auch Trägerplatten, bevorzugt aus holzbasierten Materialien, auf denen eine oder mehrere Folien aufgeklebt werden um diese zu veredeln. Die Folien unterscheiden sich meist durch ihre Eigenschaften, beispielsweise wird eine Grundierfolie, eine Bild- bzw. Musterfolie, sowie eine durchsichtige Leimfolie aufgelegt, wobei durch den Druck- und Hitzeeintrag der Leim der Leimfolie die beiden anderen Folien durchdringt und nach seiner Aushärtung für den fertigen Verbund des Laminats sorgt. Somit versteht die Erfindung die Beschichtung von Kernplatten mit einer oder mehreren Folien oder ähnlich geeigneten Beschichtung als Herstellung eines Laminats.

Auch können bei der Herstellung von Laminaten aus mehreren Substraten Schichtstoffe hergestellt werden, die im Stand der Technik als sogenannte dekorative Hochdruck-Schichtpressstoffplatten (HPL) bekannt geworden sind. Die englische Abkürzung HPL steht dabei für "high pressure laminates". Es handelt sich dabei im Wesentlichen um mehrschichtige ausgehärtete Werkstoffplatten (Laminate), die aus Schichten faseriger Zellulose (Substratpakete) bestehen können, welche mit duroplastischen Harzen, insbesondere Phenolharz, imprägniert sind und ggfs. als Oberflächenbeschichtung ein mit Melaminharz getränktes Dekorpapier aufweisen. Die gegenüber dem aufwendigen Herstellungsprozess entstehenden Vorteile sind hohe Resistenzen gegenüber Umwelteinflüssen wie Hitze, Licht und Wasser respektive Feuchtigkeit. Dazu kommt eine gute Eigenstabilität sowie eine hohe Schlag- und Schnittfestigkeit gegenüber Werkzeugen. Diese Schichtstoffplatten werden bevorzugt als Fußböden, Möbelteile und vor allem als Küchenarbeitsplatten eingesetzt.

Bei der Herstellung kommen meist Taktpressen zum Einsatz, welche mit einem hohen Druck (mehr als 5 N/mm²) und einer hohen Temperatur (über 120° C) die Einzelschichten über eine Zeit (weniger als eine Minute bis hin zu mehreren Minuten) aushärten und zu einer Schichtstoffplatte laminieren. Für optimale Herstellungsergebnisse sollen die beheizten und verpreßten Schichten zügig abgekühlt werden um Eigenspannungen abzubauen und eine maschinelle Handhabung der an- oder ausgehärteten Schichtstoffplatten zu ermöglichen. Eine alternierende Aufheizung und Abkühlung der Pressenplatten am Preßbär und Preßtisch haben sich als energetisch problematisch erwiesen und gehen in der Regel einher mit aufwendigen Konstruktionen um die Pressenplatten dünn und hinsichtlich der alternierenden Temperaturen möglichst elastisch auszuführen, beispielsweise indem Fluidbohrungen für schnelles Aufheizen und Abkühlen in dünnen Pressenplatten vorgesehen sind. Bei HPL-Anwendungen mit großen Drücken gestalten sich derartige Lösungen aber als nicht genügend steif, so dass diese trotz hohem Aufwand für temperaturelastische Preßplatten aufgrund ihrer Dicke eine hohe Wärmekapazität aufweisen und sich nicht kostengünstig oder schnell zwischen zwei Temperaturbereichen hin- und her bewegen lassen.

Systeme zur Herstellung und Transport von Laminaten zwischen verschiedenen Verfahrensschritten oder Vorrichtungen sind aus EP 2 905 126 A1 oder US 2004 0011225 A1 bekannt geworden.

Auch werden bei den bekannten Herstellungsverfahren aus Kosten- und Zeitgründen die verpreßten Laminate bei relativ hoher Temperatur nach nur einer kurzen Abkühlzeit aus der Presse ausgetragen. Meistens sind dann die Oberflächen der Laminate nicht ausreichend plastifiziert und es ergeben sich Eindrücke oder Verschiebungen an den Oberflächen durch den Transfer.

Die Aufgabe der vorliegenden Erfindung besteht darin die oben genannten Nachteile zu vermeiden und eine Vorrichtung und ein Verfahren zur diskontinuierlichen Herstellung von Laminaten aus mehreren Substraten zu ermöglichen. Weiter soll sie die Oberflächenqualität der erstellten Laminate zu bewahren oder verbessern, bevorzugt in Verbindung mit geringeren Taktzyklen.

Die Aufgabe wird für eine Vorrichtung zur diskontinuierlichen Herstellung eines Laminats aus mehreren Substraten in einer Heißpresse dadurch gelöst, dass diese
einen Bereitstellungsplatz für ein Substratpaket aus mehreren Substraten,
eine Heißpresse zur Verpressung eines Substratpakets mittels Druck und Wärme zu einem Laminat,
eine Kühlpresse zur Kühlung des Laminats und
einen Lagerplatz für das Laminat umfasst,
wobei zum Transport der Substratpakete und der Laminate zwischen dem Bereitstellungsplatz, der Heißpresse, der Kühlpresse und dem Lagerplatz zumindest eine Transfervorrichtung angeordnet ist,
wobei in der Transfervorrichtung eine Manipuliereinheit (8) einer ersten Art für das Substratpaket und zwei Manipuliereinheiten zumindest einer weiteren Art für Laminate angeordnet sind und
wobei die Manipuliereinheiten im Zuge des Transports dazu geeignet sind ein Substratpaket und Laminate aufzunehmen, zu transportieren und abzugeben.

Die Erfindung versteht dabei unter einem Bereitstellungsplatz einen Bereich, in dem Substratpakete erstellt oder fertige Substratpakete gestapelt oder einzeln bevorratet werden. Eine Heißpresse ist eine beheizte Presse, die den notwendigen Ansprüchen an Temperatur und Druck, insbesondere hinsichtlich der Steifigkeit und Maßgenauigkeit, zur Herstellung von Laminaten genügt. Eine Kühlpresse kann dabei genauso anspruchsvoll wie die Heißpresse ausgelegt sein, kann aber aus Kostengründen mit geringerer Steifigkeit und Maßhaltigkeit auskommen, da Verzug durch hohe Temperaturen oder Druck nicht zu erwarten sind. Neben aktiven Kühlpressen mit einem Kühlkreislauf in den Pressenplatten können auch passive Kühlpressen eingesetzt werden, die in der Lage sind die Laminate auch ohne aktive Kühlung während der Produktion ausreichend abzukühlen. Ohne aktive Kühlung meint hier, dass die Wirkung der Temperatursenke allein durch passive Kühlmittel wie Kühlrippen, größere Masse und/oder vergleichbare Maßnahmen erreicht wird und nicht auf direkte Mittel innerhalb der Pressenplatte, die eine temperierende Wirkung aufweisen. Auf einem Lagerplatz können Stapel an fertigen respektive ausreichend abgekühlten Laminaten gebildet werden oder die Laminate werden zu einer eigenen Stapelvorrichtung oder beispielsweise einem Kühlsternwender abtransportiert. Die in Rede stehenden Manipuliereinheiten sind geeignet entweder die Substratpakete oder die Laminate entsprechend den Vorgaben aufzunehmen und ggfs. schonend zu transportieren. In Verbindung mit einem Transferwagen bilden diese in der Regel eine Transfervorrichtung, welche besonders bevorzugt auf Schienen bewegt werden. Alternative maschinenbauliche Ausgestaltungen sind möglich.

In vorteilhafter Weise können nun mit geeigneten Manipuliereinheiten die Laminate aus der Heißpresse ausgetragen und in die Kühlpresse gefördert werden. Diese Manipuliereinheiten der Laminate unterscheiden sich von den Manipuliereinheiten für die Substratpakete in grundsätzlicher Art und Weise.

Bevorzugt liegen die Manipuliereinheiten für die Laminate zweimal vor, weil die Laminate einmal von der Heißpresse in die Kühlpresse und von der Kühlpresse zum Lagerplatz transportiert werden müssen.

Die zusätzliche Kühlpresse gegenüber dem Stand der Technik sollte sich ohne weiteres durch die Energie- und Zeiteinsparungen während des Betriebes amortisieren, insbesondere weil diese in der Regel geringeren Ansprüchen an Druck (nur Kontakt- respektive Zuhaltedruck) und Steifigkeit genügt. Ein rudimentäres Kühlsystem, wenn überhaupt, ist ebenfalls kostengünstig einzurichten. Ausdehnungen aufgrund von Temperaturunterschieden sind ebenfalls nicht vorhanden respektive soweit vernachlässigbar, was die Konstruktion und den Aufbau nochmals vereinfacht.

Es hat sich weiter überraschend gezeigt, dass durch die erfindungsgemäße Vorrichtung mit optimaler Transfervorrichtung die drucklose Liegezeit nach der Durchheizung und Verpressung in der Heißpresse so minimiert werden kann, dass diese drucklose Liegezeit (Vor- und Aushärtezeit) keine technologischen Nachteile hinsichtlich der Produktqualität nach sich zieht.

Die Manipuliereinheiten sind dazu geeignet, ein Substratpaket und zwei Laminate, bevorzugt zeitgleich, aufzunehmen, zu transportieren und abzugeben. Dies ermöglicht eine möglichst geringe Taktzeit und damit einen hohen Ausstoß an Laminaten.

Bevorzugt können als Manipuliereinheit der ersten Art für das Substratpaket Klemmleisten und/oder in den Manipuliereinheiten einer zweiten Art für die Laminate Saugleisten und/oder Schieber Verwendung finden. Klemmleisten verhindern ein Verrutschen der einzelnen Schichten in dem Substratpaket und Saugleisten sind dazu geeignet flächige Laminate schonen anzuheben und schonend zu transportieren.

In einer besonders bevorzugten Ausführungsform kann der Transport respektive das Schiebens des Laminats aus der Heißpresse in die Kühlpresse über eine Gleitfläche durchgeführt werden, welche bevorzugt zwischen der Heißpresse und der Kühlpresse angeordnet ist. Die Gleitfläche kann in oder entgegen der Produktionsrichtung beweglich ausgeführt sein und zum Beispiel auch das noch heiße Laminat untergreifen, damit es durch die Schieber der Manipuliereinheiten respektive den Transferwagen aus der Heißpresse geschoben werden kann.

Bevorzugt wäre vorgesehen, dass die Gleitfläche aus einem reibungsmindernden Material oder Wälzlagern besteht.

Die Gleitfläche kann auch zwischen der Kühlpresse und dem Lagerplatz angeordnet sein.

Alternativ oder kumulativ kann das noch heiße Laminat auch leicht angehoben und/oder direkt auf die Gleitfläche zwischen der Heiß- und der Kühlpresse respektive den Lagerplatz geschoben werden. Durch die Anordnung einer solchen Gleitfläche insbesondere in Verbindung mit Schiebern wäre es möglich ohne Saugleisten oder krafteinleitende Greifer auszukommen, welche die Oberfläche des Laminats derangieren könnten. Es wäre auch eine Kombination aus derartigen Manipuliereinheiten und Schiebern denkbar, welche auf das Laminat nur eine geringe Kraft entgegen der Schwerkraft ausüben, damit die Haftreibung leichter überwunden werden kann, um das Laminat zu verschieben. Insbesondere kann es hierzu vorgesehen sein, dass Laminat nicht oder nicht ganz anzuheben um die Haftreibung zu verringern. Bevorzugt wird bei geringer Ablösung von der Heizplatte das Laminat nur entlang der Längsseiten angehoben während der Mittelbereich parallel zur Transportrichtung noch in Kontakt mit der Heizplatte verbleibt und während des Transports auf der Heizplatte gleitet oder rutscht.

Alternativ oder aufbauend können die Positionierbereiche der Substratpakete bzw. der Laminate innerhalb des Bereitstellungsplatzes, der Heißpresse, der Kühlpresse und des Lagerplatzes im Wesentlichen im gleichen Abstand zueinander angeordnet sind, bevorzugt in einem geringsten Abstand. Dies verbessert ebenfalls die Taktzeit und ermöglicht eine vereinfachte Steuerung und Regelung der Transfervorrichtung respektive der einzelnen Manipuliereinheiten insbesondere hinsichtlich der Verfahrwege und -zeiten. Gleichzeitig kann hierbei Bauraum der Anlage minimiert werden.

Insbesondere von Vorteil ist diese Anordnung bei mechanisch verbundenen Manipuliereinheiten bzw. einer die verschiedenen Bereiche übergreifenden Transfervorrichtung. Überdies wird der Bauraum der Anlage verringert.

Weiterhin können zumindest Schienen angeordnet sein, auf denen die Manipuliereinheiten respektive die Transfervorrichtungen verfahrbar sind. Besonders bevorzugt sind Schienen angeordnet, die die verschiedenen Bereiche verbinden, insbesondere den Bereitstellungsplatz, die Heiß- und Kühlpresse und den Lagerplatz.

Alternativ oder kumulativ kann vorgesehen sein, dass ein oder mehrere Transferwagen, bevorzugt auf den Schienen, angeordnet ist, welche zumindest zum Transport der Manipuliereinheiten für die Laminate zwischen Heißpresse, Kühlpresse und Lagerplatz angeordnet sind. Besonders bevorzugt auch zum Transport der Manipuliereinheiten für die Substratpakete zwischen Bereitstellungsplatz und Heißpresse.

Besonders bevorzugt kann die Transfervorrichtung, welche zumindest aus den Manipuliervorrichtungen, bevorzugt an Schienen und besonders bevorzugt mit Transferwagen, zum Transport der Substratpaket und/oder der Laminate eine gemeinsame Bewegung durchführen. Dies führt ebenfalls zu einer Verbesserung der Taktzeiten, insbesondere wenn ein oder mehrere Transferwagen angeordnet sind und entsprechend gemeinsam angesteuert werden können. Auch die Aufnahme- und Abgabekinematik ist bevorzugt gemeinsam durchzuführen.

Für die gemeinsame Ansteuerung können mechanische Verbindungen oder elektronische Steuerungsmittel vorgesehen sein.

In einer alternativen Ausgestaltung können an den Manipuliereinheiten Mittel, bevorzugt geregelte Antriebe und/oder pneumatische Zylinder mit geregeltem Druck, angeordnet sein, die geeignet sind an den Längsseiten der Substratpakete und/oder der Laminate quer zur Transportrichtung Zugkräfte einzuleiten um ein Durchhängen zu verringern oder zu vermeiden.

Bevorzugt ist die Lagerfläche für das Substratpaket an dem Bereitstellungsplatz kleiner als die Flächenseite des Substratpakets, wobei bevorzugt die Längsseiten der Lagerfläche, zumindest teilweise, schmaler zu einander angeordnet sind als der Abstand der Längsseiten des Substratpakets. Damit ist es möglich, dass Klemmleisten das Substratpaket im Liegen für den Transport einklemmen können bevor sie es anheben, damit die verschiedenen Schichten zueinander nicht verrutschen können und/oder damit die Ablageposition in der Heißpresse optimal angefahren werden kann und sich währenddessen das Substratpaket in seiner Gesamtheit nicht unkontrolliert verschiebt.

In diesem Zusammenhang kann es sinnvoll sein, dass im Bereich der Überstände der Substratpakete bevorzugt verfahrbare Stützelemente angeordnet sind oder dass im Bereich der Überstände der Substratpakete die unterhalb der Substratpakete angeordneten Teile der Manipuliereinheiten die Substratpakete stützen. Damit kann ein Herunterhängen von Teilen der Substratschichten vermieden werden und die Aufnahme des Substratpakets durch die Manipuliereinheiten erleichtert oder verbessert werden.

Für eine optimale Auslastung der Vorrichtung kann es sinnvoll sein, wenn anstelle eines Substratpaketes und eines Laminates zumindest zwei oder mehr Substratpakete und somit zumindest zwei oder mehr Laminate in einem kleineren Format hintereinander respektive nebeneinander die Vorrichtung entsprechend durchlaufen. Die Manipuliereinheiten sind entsprechend auf diesen Vorgang anzupassen. Bevorzugt wird das Substrat (Substratpaket oder Laminat) quer zur Transportrichtung ein oder mehrmals unterbrochen.

Alternativ oder kumulativ sind an den Manipuliereinheiten und/oder an den Transferwagen Mittel zur Positionierung des Substratpakets und/oder des Laminats (6) längs und/oder quer zur Transportrichtung angeordnet sind, wobei bevorzugt diese Mittel geeignet sind die Positionierung während der Bewegung in Transportrichtung, während oder nach dem Ablegen durchzuführen. Dies ist insbesondere dann von Vorteil, wenn eine der beide Oberflächenseiten des Substratpaketes graphische Merkmale aufweisen, die mit Erhöhungen oder Vertiefungen der Heizplatte übereinstimmen, um nach dem Pressvorgang eine gewisse Haptik/Maserung auf der Flächenseite zu erzeugen.

Diese Mittel zur Positionierung des Substratpaketes und/oder des Laminats können eine Sensorik zur Überwachung und/oder Stellglieder zur Einstellung der Lage und/oder Position umfassen, wobei bevorzugt die Stellglieder mit den Manipuliereinheiten und/oder an den Substratpaketen und/oder an den Laminaten in Wirkverbindung angeordnet sind. Insbesondere mit Stellglieder, die direkt an den Manipuliereinheiten oder den Transferwägen angeordnet sind und direkt auf das Substratpaket oder das Laminat einwirken können ist es möglich eine feinfühlige und akkurate Positionierung durchzuführen.

Die Aufgabe wird für ein Verfahren zur diskontinuierlichen Herstellung eines Laminats aus mehreren Substraten in einer Heißpresse dadurch gelöst, dass diese die folgenden Verfahrensschritte umfasst:
- die Bereitstellung eines Substratpaket aus mehreren Substraten auf einem Bereitstellungsplatz,
- die Verpressung des Substratpaketes in einer Heißpresse zu einem Laminat mittels Druck und Wärme,
- die Kühlung des Laminats in einer Kühlpresse und
- die Ablage des gekühlten Laminats an einem Lagerplatz,

wobei eine Transfervorrichtung die Substratpakete und die Laminate zwischen einem Bereitstellungsplatz, der Heißpresse, der Kühlpresse und dem Lagerplatz transportiert,
wobei zumindest eine Manipuliereinheit (8) einer ersten Art für das Substratpaket (5) und Manipuliereinheiten (9) zumindest einer weiteren Art für die Laminate (6) in der Transfervorrichtung (10) verwendet werden und
wobei die Manipuliereinheiten (8, 9) im Zuge des Transports das Substratpaket (5) und die Laminate (6) aufzunehmen, transportieren und abgeben.

Die nachstehenden Merkmale können das oben genannte Verfahren eigenständig oder in Kombination weiter verbessern, indem
- die Manipuliereinheiten dazu geeignet sind ein Substratpaket und zwei Laminate zeitgleich aufzunehmen, zu transportieren und/oder abzugeben;
- die Klemmleisten als Manipuliereinheit für das Substratpaket und/oder Saugleisten und/oder Schieber als Manipuliereinheiten für die Laminate verwendet werden;
- die Substratpakete bzw. der Laminate innerhalb des Bereitstellungsplatzes, der Heißpresse, der Kühlpresse und des Lagerplatzes auf Positionierbereichen abgelegt werden, welche im Wesentlichen im gleichen Abstand zueinander angeordnet sind, bevorzugt in einem geringsten Abstand;
- die Manipuliereinheiten als Transfervorrichtung an, bevorzugt die Anlagenteile übergreifenden, Schienen verfahren werden;
- ein oder mehrere Transferwagen, bevorzugt auf den Schienen zumindest zum Transport der Manipuliereinheiten für die Laminate zwischen Heißpresse, Kühlpresse und Lagerplatz verfahren werden, bevorzugt auch zum Transport der Manipuliereinheiten für die Substratpakete zwischen Bereitstellungsplatz und Heißpresse;
- die Transfervorrichtung zum Transport der Substratpakete und/oder der Laminate eine gemeinsame Bewegung durchführt;
- an den Manipuliereinheiten Mittel, bevorzugt geregelte Antriebe und/oder Pneumatikzylinder mit geregeltem Druck, angeordnet sind, die geeignet sind an den Längsseiten der Substratpakete und/oder der Laminate quer zur Transportrichtung Zugkräfte einzuleiten um ein Durchhängen zu vermeiden;
- die Lagerfläche für das Substratpaket in dem Bereitstellungsplatz kleiner ist als die Flächenseite des Substratpakets, wobei bevorzugt die Längsseiten der Lagerfläche schmaler sind als die Längsseiten des Substratpakets;
- im Bereich der Überstände der Substratpakete bevorzugt verfahrbare Stützelemente angeordnet sind oder dass im Bereich der Überstände der Substratpakete die unterhalb der Substratpakete angeordneten Manipuliereinheiten die Substratpakete stützen;
- anstelle eines Substratpaketes und eines Laminates zumindest zwei Substratpakete und zumindest zwei Laminate in einem kleineren Format nebeneinander die Vorrichtung entsprechend durchlaufen;
- das Substratpaket und/oder das Laminat längs und/oder quer zur Transportrichtung durch geeignete Mittel positioniert werden, wobei bevorzugt diese Mittel geeignet sind die Positionierung im Zuge der Bewegung in Transportrichtung, während dem Ablegen und/oder nach dem Ablegen durchzuführen; und/oder
- das Substratpaket und/oder das Laminat durch eine Sensorik hinsichtlich ihrer Lage oder Position überwacht und/oder durch Stellglieder in ihrer Lage und/oder Position eingestellt werden, wobei bevorzugt die Stellglieder mit den Manipuliereinheiten und/oder an den Substratpaketen und/oder an den Laminaten in Wirkverbindung wirkverbunden sind.

Durch die Erfindung ist es nun möglich eine extrem schnelle und sichere Abfolge vorzusehen, um kurze Taktzeiten und möglichst hohe Kapazitäten zu erreichen.

Nachstehend sind wesentliche Merkmale, wie sie die Erfindung versteht, nochmals erläutert:
Ein Laminat ist ein Schichtkörper, bestehend aus einzelnen Schichten (Substraten), ggfs. zusammen mit einem dickeren Trägerkörper, welche mittels Druck und Wärme zusammengefügt werden. Vor der Laminierung werden also die einzelnen Schichten zu einem Substratpaket, ggfs. mit einem dickeren Trägerkörper, zusammengestellt und einer Presse zugeführt.

Eine Heißpresse oder eine Kühlpresse umfasst Mittel zur Aufbringung einer Flächenpressung auf die Flächenseiten des Substratpakets, in der Regel bis das Bindemittel an- oder ausgehärtet ist, welches die Schichten verbindet. In der Presse sind Mittel, beispielsweise hydraulische Druckzylinder, zur Bewegung der beheizten Pressenplatten angeordnet, damit das Substrat dazwischen verpresst werden kann. Die Pressenplatten sind vorzugsweise beheizt oder gekühlt und können reliefartig gemasert sein um eine Prägung auf der oder den Flächenseiten des Laminats einzubringen. Eine reine Kontaktnahme der Pressenplatten mit dem Laminat im Zuge der Kühlung ist ebenfalls denkbar.

Das Bindemittel selbst kann als eigene Schicht (Harzfolie) im Substratpaket vorliegen, einzelne Schichten können von sich aus adhäsiv gegenüber den benachbarten Schichten wirken oder die Schichten können mit einem Bindemittel beaufschlagt sein.

Die Vorrichtung zur diskontinuierlichen Herstellung eines Laminats könnte technisch auch als Anlage zur Herstellung definiert sein, da sie aus einzelnen verschiedenen Vorrichtungen besteht, die zur Durchführung des Herstellungsvorganges zusammenwirken.

Manipuliereinheiten können angetriebene mithin bewegliche Mittel sein, die in der Lage sind ein Substratpaket zu manipulieren, indem Sie es bevorzugt mit einer Kraft in und entgegen der Schwerkraft beaufschlagen, bevorzugt zumindest teilweise oder vollständig anheben und es über eine vorgegebene Wegstrecke transportieren. Die Hauptbewegung von einem Vorrichtungs- oder Anlagenteil zum nächsten kann dabei von eigenen Vorrichtungen durchgeführt werden, beispielsweise von einem Transportwagen.

Elemente zur Handhabung der Substrate/Laminate können Saugleisten sein, aber auch Sauger, Saugbalken, klemmende Elemente oder Schieber. Die Elemente können dabei von einer oder beiden Flächenseiten, sowie von den Schmalseiten Kräfte in das Substratpaket oder das Laminat einleiten. Besonders bevorzugt kann ein Schieber vorgesehen sein, der über die Schmalseiten (Höhe/Dicke definierende Seiten) Kräfte einleiten kann.

Besonders bevorzugt ist vorgesehen, dass ein oder mehrere Stellglieder vorgesehen sind, die unabhängig von den Elementen zur Handhabung bzw. zum Transport die Lage und/oder Position des Substratpakets bzw. des Laminats beeinflussen können, höchst bevorzugt durch Einleitung von Kräften an den Schmalseiten. Die Schmalseiten sind die Seiten, welche gegenüber der Länge und Breite eines Substrates/Laminats das geringste Maß aufweist, somit die Höhe oder die Dicke des Substrates/Laminates definieren. Mit anderen Worten verbinden die, in der Regel vier, Schmalseiten die beiden Flächenseiten.

Optional weisen die Elemente zur Handhabung ein das Laminat oder Substrat mit einem das Substrat/Laminat von der Unterlage trennendes Element auf, vergleichbar mit einem Kuchenheber. Bevorzugt kann das trennende Element aus einem Material sein, welches weicher als die Oberfläche der Pressenplatte ist, um Beschädigungen der Pressenplatte respektive des dort aufgebrachten Reliefs, zu vermeiden.

Bevorzugt kann ein Transferwagen vorgesehen sein, der die Manipuliereinheiten trägt und verfährt, dieser kann aber auch technisch anderweitig ersetzt werden, bzw. die Manipuliereinheiten können selbstständig verfahrbar ausgebildet sein. In einer bevorzugten Ausführungsform befinden sich alle Manipuliereinheiten für die drei Bereiche angelenkt auf einem Transportwagen.

Weiterführende Manipulatoren, beispielsweise zum Transport eines Substratpakets zum Bereitstellungsplatz oder zum Transport eines Laminats vom Lagerplatz zur weiteren Verarbeitung können vorgesehen sein. Entsprechend alternativ können auf dem Bereitstellungsplatz Mittel vorgesehen sein, die dort erst das Substratpaket bilden, indem die einzelnen Schichten dort zusammengelegt werden und/oder kann auf dem Lagerplatz erst ein Stapel an Laminaten gebildet werden, der als Stapel abtransportiert wird.

Besonders bevorzugt versteht die Erfindung unter einer anderen Art an Manipuliereinheiten Einrichtungen, die sich hinsichtlich Ihrer Greif- oder Haltemethodik unterscheiden. Beispielsweise sollten die Manipuliereinheiten für das Substratpaket geeignet sein, dieses aus einer Vielzahl an Schichten bestehende Paket so zu transportieren, dass sich die Schichten nicht verschieben oder das Paket per se geschädigt wird. Die Oberfläche ist dabei meist eher kein Problem während des Manipulierens, somit sind Greifer, Klemmeinrichtungen oder dergleichen durchaus geeignet.

Im Gegensatz dazu sind frisch verpreßte Laminate an ihrer Oberfläche empfindlich bzw. noch weich und zu starke Eingriffe durch Manipuliereinheiten könnten darauf Spuren hinterlassen. Also sollten die Manipuliereinheiten der zweiten Art für die Laminate entsprechend anders ausgestaltet sein, dass diese, insbesondere schonender, die Oberflächen mittels möglichst flächiger Unterdrucksaugern anheben. Ganz besonders bevorzugt wird auf ein großflächiges Anheben verzichtet bzw. wird nur so viel Kraft vertikal eingeleitet, damit eine Schiebevorrichtung das Laminat oberflächenschonend (auf der Liegeseite) verschieben kann. Ganz besonders bevorzugt wird das Laminat auch durch die ggfs. vorhandenen Unterdrucksaugleisten horizontal verschoben bzw. werden Kräfte zusätzlich eingeleitet um auch wiederum auf den Längsseiten Stauchungen zu vermeiden. Somit ist es im Sinne der Erfindung, dass entweder nur geschoben wird, indem ein Schieber verwendet wird oder eine Unterdruckleiste mit oder ohne vertikaler Krafteinleitung ebenfalls das Laminat schiebt, eine Kombination aus beidem und/oder dass bis zur einer zulässigen Grenze Kraft vertikal zur Verminderung der Haftreibung bzw. der liegenden Masse, eingeleitet wird und ggfs. parallel oder anschließend eine schiebende Kraft eingeleitet wird. Hierzu kann es insbesondere möglich sein, dass die Krafteinleitung in die Laminate steuerbare oder regelbar ist, um beispielsweise auf unterschiedliche Laminate und deren Härtegrade reagieren zu können, bevorzugt automatisiert.

Hinsichtlich einer Gleitfläche sei ausgeführt, dass diese bevorzugt ein das Substrat bzw. das Laminat stützende Fläche darstellt, welche ein Durchhängen/-biegen des Substrats auf dem Weg verhindert. Dabei kann diese Fläche als Rolle, Tisch, Balken oder dergleichen ausgebildet sein und wird adaptiv oder stationär während des Transportes wirken. Dabei kann vorgesehen sein, dass bei einer quasi stationären Anordnung das Laminat über die stützende Fläche geschoben oder gezogen wird. Bei längeren Transportwegen kann die stützende Fläche eine unterstützende Bewegung ausführen und/oder aus mehreren beabstandeten Gleitflächen bestehen. Die Gleitfläche kann auch geeignet sein als eine Art Übergabetisch zu wirken, das Laminat unterfahren, aufnehmen und transportieren.

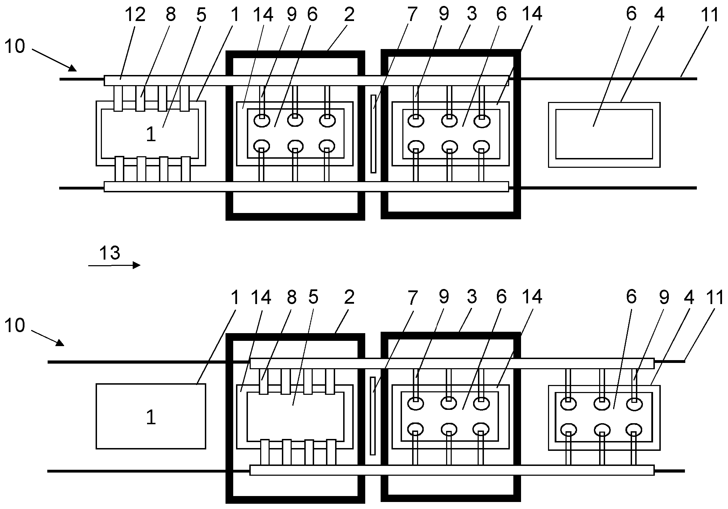

Weitere vorteilhafte Maßnahmen und Ausgestaltungen des Gegenstandes der Erfindung gehen aus den Unteransprüchen und der folgenden Beschreibung mit der Zeichnung hervor.

Die Zeichnung zeigt dabei in einer schematischen Draufsicht die Vorrichtung in zwei verschiedenen Betriebspositionen. Dabei sei vorausgeschickt, dass die Zeichnung ein gesamt optimiertes Ausführungsbeispiel zeigt, in dem viele einzelne und voneinander unabhängig kombinierbare Merkmale der Erfindung zur Taktzeitoptimierung eingesetzt und kombiniert werden.

Der obere Teil der Zeichnung zeigt dabei die Vorrichtung mit einem Bereitstellungsplatz 1, einer Heißpresse 2, einer Kühlpresse 3 und einem Legeplatz 4 und eine diese Bereiche verbindende Transfervorrichtung 10. Diese Transfervorrichtung kann in einer einfachen Ausführungsform nur aus Manipuliereinheiten 8 für den Transport der Substratpakete 5 vom Bereitstellungsplatz 1 in die Heißpresse 2 und aus Manipuliereinheiten 9 für den Transport der aus den Substratpaketen 5 hergestellten Laminate 6 von der Heißpresse 2 in die Kühlpresse 3 respektive von der Kühlpresse 3 auf den Lagerplatz 4 bestehen. In vorteilhafter Weise können die Manipuliereinheiten 8 und 9 an Schienen 11 angeordnet sein und daran bewegt werden. Höchst vorteilhaft sind zwischen den Manipuliereinheiten 8, 9 und den Schienen 11 Transferwagen 12 angeordnet. Diese Transferwagen 12 können jeweils für einen Set Manipuliereinheiten 8, 9 angeordnet sein. Alternativ können diese miteinander mechanisch oder elektronisch (Steuerungstechnik) verbunden sein. Höchstalternativ, wie in der Zeichnung dargestellt, ist nur ein Transferwagen 12 angeordnet, der die Manipuliereinheiten 8 und 9 für die Substratpakete 5 und die Laminate 6 in und entgegen der Transportrichtung 13 bewegt.

Die Transportrichtung 13 zeigt die grundsätzliche Transport- bzw. Produktionsrichtung an, entlang welcher die Substratpakete zu Laminaten verpreßt und die Laminate gekühlt und auf dem Lagerplatz gestapelt bzw. für die weitere Verwendung bereitgestellt werden.

In optimaler Weise werden die Bereiche, an denen die Substratpakete respektive Laminate zu liegen kommen, beispielsweise die Pressenplatten 14 in der Heißpresse 2 oder der Kühlpresse 3, im Wesentlichen in einem ähnlichen oder sogar gleichen Abstand zueinander angeordnet sein, um die gleichzeitige Abgabe oder Aufnahme der Substratpakete oder Laminate zu gewährleisten.

Der verfahrenstechnische Ablauf bei der Herstellung von Laminaten (Schichtwerkstoffen) wäre dabei wie folgt:
Auf dem Bereitstellungsplatz 1 werden die einzelnen Teile der Laminate nacheinander zu einem Substratpaket 5 geschichtet oder ein Substratpaket 5 wird dort bereitgestellt. Wie im oberen Teil der Zeichnung zu sehen ist, steht der Transferwagen 12 der Transfervorrichtung 10 links bereit und reicht bis zur Kühlpresse 3. Wenn die Produktion fortgeschritten ist, liegt zu diesem Zeitpunkt nach dem Pressvorgang in der Heißpresse 2 ein heißes Laminat 6 bereit und gleichzeitig liegt in der Kühlpresse 3 ein gekühltes Laminat 6. Die Manipuliereinheiten 8, 9 der Transfervorrichtung 10 nehmen, bevorzugt gleichzeitig das Substratpaket 5 am Bereitstellungsplatz 1, das Laminat 6 in der Heißpresse 2 und das Laminat 6 in der Kühlpresse 3 auf.

Nach dem Aufnahmevorgang verfährt der Transferwagen 12 entlang der Transportrichtung 13 nach rechts, vgl. den unteren Teil der Zeichnung, und kann das neue Substratpaket 5 in die Heißpresse 2, das heiße Laminat 6 in die Kühlpresse 3 und das gekühlte Laminat 6 auf die Lagerfläche am Lagerplatz 4 ablegen. Während die Heißpresse 2 und die Kühlpresse 3 schließen verfährt der Transferwagen 12 der Transfervorrichtung 10 "leer" entgegen der Transportrichtung 13 zurück. Somit steht der Transferwagen 12 wieder in Position wie im oberen Teil der Zeichnung und kann nach Bereitstellung eines neuen Substratpakets 5 und Öffnen der Heiß- und Kühlpressen 2, 3 dieses und die Laminate 6 aufnehmen, um alle wiederum entlang der Transportrichtung 13 zu transportieren. Weiter findet sich eine optionale Gleitfläche 7 zwischen der Heiß- und Kühlpresse 2, 3, welche den Transport des Laminats 6 unterstützt bzw. ein Durchhängen 1024 desselbigen verhindert.

### Bezugszeichenliste:

- 1.: Bereitstellungsplatz
- 2.: Heißpresse
- 3.: Kühlpresse
- 4.: Lagerplatz
- 5.: Substratpaket
- 6.: Laminat
- 7.: Gleitfläche
- 8.: Manipuliereinheit
- 9.: Manipuliereinheit
- 10.: Transfervorrichtung
- 11.: Schienen
- 12.: Transferwagen
- 13.: Transportrichtung
- 14.: Pressenplatte

## Patentansprüche

1. Vorrichtung zur diskontinuierlichen Herstellung eines Laminats aus mehreren Substraten in einer Heißpresse umfassend:
- einen Bereitstellungsplatz (1) für ein Substratpaket (5) aus mehreren Substraten,
- eine Heißpresse (2) zur Verpressung eines Substratpakets (5) mittels Druck und Wärme zu einem Laminat (6),
- eine Kühlpresse (3) zur Kühlung des Laminats (6) und
- einen Lagerplatz (4) für das Laminat (6),
wobei zum Transport der Substratpakete (5) und der Laminate (6) zwischen dem Bereitstellungsplatz (1), der Heißpresse (2), der Kühlpresse (3) und dem Lagerplatz (4) zumindest eine Transfervorrichtung (10) angeordnet ist,
wobei in der Transfervorrichtung (10) eine Manipuliereinheit (8) einer ersten Art für das Substratpaket (5) und zwei Manipuliereinheiten (9) zumindest einer weiteren Art für Laminate (6) angeordnet sind und wobei die Manipuliereinheiten (8, 9) im Zuge des Transports dazu geeignet sind ein Substratpaket (5) und Laminate (6) aufzunehmen, zu transportieren und abzugeben.

2. Vorrichtung nach Anspruch 1, **dadurch gekennzeichnet, dass** die Manipuliereinheiten (8, 9) dazu geeignet sind ein Substratpaket (5) und zwei Laminate (6) zeitgleich aufzunehmen, zu transportieren und/oder abzugeben.

3. Vorrichtung zumindest nach einem der vorhergehenden Ansprüche, **dadurch gekennzeichnet, dass** an der Manipuliereinheit (8) für das Substratpaket (5) Klemmleisten und/oder an den Manipuliereinheiten (9) für die Laminate (6) Sauger, Saugleisten und/oder Schieber respektive Schiebelemente angeordnet sind.

4. Vorrichtung zumindest nach einem der vorhergehenden Ansprüche, **dadurch gekennzeichnet, dass** zum Transport respektive des Schiebens des Laminats (6) aus der Heißpresse (2) in die Kühlpresse (3) oder von der Kühlpresse (3) auf den Lagerplatz (4) eine Gleitfläche angeordnet ist, welche bevorzugt haftmindernde Mittel oder Wälzlager aufweist.

5. Vorrichtung zumindest nach einem der vorhergehenden Ansprüche, **dadurch gekennzeichnet, dass** ein oder mehrere Transferwagen (12), bevorzugt auf Schienen, angeordnet sind, welche zumindest zum Transport der Manipuliereinheiten (9) für die Laminate zwischen Heißpresse (2), Kühlpresse (3) und/oder den Lagerplatz (4) geeignet sind, bevorzugt auch zum Transport der Manipuliereinheiten (8) für die Substratpakete (5) zwischen Bereitstellungsplatz (1) und Heißpresse (2).

6. Vorrichtung nach Anspruch 5, **dadurch gekennzeichnet**, das die Transferwagen (12) und/oder die Manipuliereinheiten (8, 9) der Transfervorrichtung (10) zum Transport der Substratpakete (5) und/oder der Laminate (6) geeignet sind eine gemeinsame Bewegung durchführen.

7. Vorrichtung zumindest nach einem der vorhergehenden Ansprüche, **dadurch gekennzeichnet, dass** an den Manipuliereinheiten (8, 9) Mittel, bevorzugt geregelte Antriebe und/oder Pneumatikzylinder mit geregeltem Druck, angeordnet sind, die geeignet sind an den Längsseiten der Substratpakete (5) und/oder der Laminate (6) quer zur Transportrichtung (13) Zugkräfte einzuleiten um ein Durchhängen zu vermeiden.

8. Vorrichtung zumindest nach einem der vorhergehenden Ansprüche, **dadurch gekennzeichnet, dass** die Transfervorrichtung (10) geeignet ist, anstelle eines Substratpaketes (5) und eines Laminates (6) zumindest zwei oder mehr Substratpakete (5) und/oder zumindest zwei oder mehr Laminate (6) gleichzeitig entlang der Produktionsrichtung (13) durch die Vorrichtung zu transportieren.

9. Vorrichtung zumindest nach einem der vorhergehenden Ansprüche, **dadurch gekennzeichnet, dass** im Bereich von Überständen der Substratpakete (5), gebildet durch eine kleinere Lagerfläche für die Flächenseite des Substratpakets (5), bevorzugt verfahrbare, Stützelemente angeordnet sind oder dass im Bereich der Überstände der Substratpakete (5) die unterhalb der Substratpakete (5) angeordneten Manipuliereinheiten (8) die Substratpakete (5) stützen.

10. Vorrichtung zumindest nach einem der vorhergehenden Ansprüche, **dadurch gekennzeichnet, dass** an den Manipuliereinheiten (8, 9) und/oder an den Transferwagen (12) Mittel zur Positionierung des Substratpakets (5) und/oder des Laminats (6) längs und/oder quer zur Transportrichtung (13) angeordnet sind, wobei bevorzugt diese Mittel geeignet sind die Positionierung während der Bewegung in Transportrichtung (13), während oder nach dem Ablegen durchzuführen.

11. Vorrichtung nach Anspruch 10, **dadurch gekennzeichnet, dass** die Mittel zur Positionierung des Substratpaketes und/oder des Laminats eine Sensorik zur Überwachung und/oder Stellglieder zur Einstellung der Lage und/oder
Position umfassen, wobei bevorzugt die Stellglieder mit den Manipuliereinheiten (8, 9) und/oder an den Substratpaketen (5) und/oder an den Laminaten (6) in Wirkverbindung angeordnet sind.

12. Vorrichtung nach Anspruch 10 oder 11, **dadurch gekennzeichnet, dass** die Mittel zur Einstellung der Lage und/oder der Position des durch die Manipuliereinheiten (8, 9) gehaltene Substratpakets (5) und/oder des Laminats (6) Stellglieder aufweisen, die geeignet sind das Substratpaket (5) und/oder das Laminat (6) gegenüber den Manipuliereinheiten (8, 9) zu verschieben, bevorzugt durch eine Krafteinleitung in die Schmalseite.

13. Verfahren zur diskontinuierlichen Herstellung eines Laminats aus mehreren Substraten in einer Heisspresse umfassend die folgenden Verfahrensschritte:
- die Bereitstellung eines Substratpaket (5) aus mehreren Substraten auf einem Bereitstellungsplatz (1),
- die Verpressung des Substratpaketes (5) in einer Heißpresse (2) zu einem Laminat (6) mittels Druck und Wärme,
- die Kühlung des Laminats (6) in einer Kühlpresse (3) und
- die Ablage des gekühlten Laminats (6) an einem Lagerplatz (4), wobei eine Transfervorrichtung (10) die Substratpakete (5) und die Laminate (6) zwischen einem Bereitstellungsplatz (1), der Heißpresse (2), der Kühlpresse (3) und dem Lagerplatz (4) transportiert,
wobei zumindest eine Manipuliereinheit (8) einer ersten Art für das Substratpaket (5) und Manipuliereinheiten (9) zumindest einer weiteren Art für die Laminate (6) in der Transfervorrichtung (10) verwendet werden und wobei die Manipuliereinheiten (8, 9) im Zuge des Transports das Substratpaket (5) und die Laminate (6) aufzunehmen, transportieren und abgeben.

14. Verfahren nach einem vorherigen Verfahrensanspruch, **dadurch gekennzeichnet, dass** die Laminate (6) aus der Heißpresse (2) in die Kühlpresse (3) oder aus der Kühlpresse (3) heraus mittels Schiebern geschoben werden, bevorzugt über eine Gleitfläche (7), höchst bevorzugt über eine Gleitfläche (7) mit haftungsmindernden Mitteln oder Gleitlagern.

15. Verfahren nach einem vorherigen Verfahrensanspruch, **dadurch gekennzeichnet, dass** ein oder mehrere Transferwagen (12), bevorzugt auf Schienen (11), zumindest zum Transport der Manipuliereinheiten (9) für die Laminate zwischen Heißpresse (2), Kühlpresse (3) und Lagerplatz (4) verfahren werden, bevorzugt auch zum Transport der Manipuliereinheiten (8) für die Substratpakete (5) zwischen Bereitstellungsplatz (1) und Heißpresse (2).

16. Verfahren nach einem vorherigen Verfahrensanspruch, **dadurch gekennzeichnet, dass** die Transferwagen (12) und/oder die Manipuliereinheiten (8, 9) der Transfervorrichtung (10) zum Transport der Substratpakete (5) und/oder der Laminate (6) eine gemeinsame Bewegung durchführen.

17. Verfahren nach einem vorherigen Verfahrensanspruch, **dadurch gekennzeichnet, dass** an den Manipuliereinheiten (8, 9) Mittel, bevorzugt geregelte Antriebe und/oder Pneumatikzylinder mit geregeltem Druck, angeordnet sind, die geeignet sind an den Längsseiten der Substratpakete (5) und/oder der Laminate (6) quer zur Transportrichtung (13) Zugkräfte einzuleiten um ein Durchhängen zu verringern oder zu vermeiden.

18. Verfahren nach einem vorherigen Verfahrensanspruch, **dadurch gekennzeichnet, dass** das Substratpaket (5) und/oder das Laminat (6) längs und/oder quer zur Transportrichtung (13) durch geeignete Mittel positioniert werden, wobei bevorzugt diese Mittel geeignet sind die Positionierung im Zuge der Bewegung in Transportrichtung (13), während dem Ablegen und/oder nach dem Ablegen durchzuführen.

19. Verfahren nach einem vorherigen Verfahrensanspruch, **dadurch gekennzeichnet, dass** das Substratpaket und/oder das Laminat durch eine Sensorik hinsichtlich ihrer Lage oder Position überwacht und/oder durch Stellglieder in ihrer Lage und/oder Position eingestellt werden, wobei bevorzugt die Stellglieder mit den Manipuliereinheiten (8, 9) und/oder an den Substratpaketen (5) und/oder an den Laminaten (6) in Wirkverbindung wirkverbunden sind.

## Claims

1. Device for the discontinuous production of a laminate from a plurality of substrates in a hot press, comprising:
- a supply location (1) for a substrate package (5) consisting of a plurality of substrates,
- a hot press (2) for pressing a substrate package (5) by means of pressure and heat to form a laminate (6),
- a cooling press (3) for cooling the laminate (6), and
- a storage area (4) for the laminate (6),
wherein at least one transfer device (10) is arranged for transporting the substrate packages (5) and the laminates (6) between the supply location (1), the hot press (2), the cooling press (3) and the storage location (4), wherein a manipulating unit (8) of a first type for the substrate package (5) and two manipulating units (9) of at least one further type for laminates (6) are arranged in the transfer device (10), and wherein the manipulating units (8, 9) are suitable, in the course of the transportation, for picking up, transporting and releasing a substrate package (5) and laminates (6).

2. Device according to claim 1, **characterized in that** the manipulating units (8, 9) are suitable for simultaneously receiving, transporting and/or discharging a substrate package (5) and two laminates (6).

3. Device according to at least one of the preceding claims, **characterized in that** clamping bars are arranged on the manipulating unit (8) for the substrate package (5) and/or suction cups, suction bars and/or sliders or pushing elements are arranged on the manipulating units (9) for the laminates (6).

4. Device according to at least one of the preceding claims, **characterized in that**, for transporting or pushing the laminate (6) out of the hot press (2) into the cooling press (3) or from the cooling press (3) to the storage location (4), a sliding surface is arranged which preferably has anti-adhesive means or rolling bearings.

5. Device according to at least one of the preceding claims, **characterized in that** one or more transfer carriages (12) are arranged, preferably on rails, which are suitable at least for transporting the manipulating units (9) for the laminates between the hot press (2), cooling press (3) and/or the storage location (4), preferably also for transporting the manipulating units (8) for the substrate packages (5) between the supply location (1) and hot press (2).

6. Device according to claim 5, **characterized in that** the transfer carriages (12) and/or the manipulating units (8, 9) of the transfer device (10) for transporting the substrate packages (5) and/or the laminates (6) are suitable for performing a common movement.

7. Device according to at least one of the preceding claims, **characterized in that** means, preferably controlled drives and/or pneumatic cylinders with controlled pressure, are arranged on the manipulating units (8, 9), which are suitable for introducing tensile forces on the longitudinal sides of the substrate packages (5) and/or the laminates (6) transversely to the transport direction (13) in order to avoid sagging.

8. Device according to at least one of the preceding claims, **characterized in that** the transfer device (10) is suitable for transporting at least two or more substrate packages (5) and/or at least two or more laminates (6) simultaneously along the production direction (13) through the device instead of one substrate package (5) and one laminate (6).

9. Device according to at least one of the preceding claims, **characterized in that** in the region of projections of the substrate packages (5), formed by a smaller bearing surface for the surface side of the substrate package (5), preferably movable support elements are arranged, or **in that** in the region of the projections of the substrate packages (5), the manipulating units (8) arranged below the substrate packages (5) support the substrate packages (5).

10. Device according to at least one of the preceding claims, **characterized in that** means for positioning the substrate package (5) and/or the laminate (6) lengthwise and/or crosswise with respect to the transport direction (13) are arranged on the manipulating units (8, 9) and/or on the transfer carriage (12), wherein these means are preferably suitable for carrying out the positioning during the movement in the transport direction (13), during or after the depositing.

11. Device according to claim 10, **characterized in that** the means for positioning the substrate package and/or the laminate comprise a sensor system for monitoring and/or actuators for adjusting the location and/or position, wherein the actuators are preferably operatively connected to the manipulating units (8, 9) and/or to the substrate packages (5) and/or to the laminates (6).

12. Device according to claim 10 or 11, **characterized in that** the means for adjusting the location and/or the position of the substrate package (5) held by the manipulating units (8, 9) and/or of the laminate (6) have actuators which are suitable for displacing the substrate package (5) and/or the laminate (6) relative to the manipulating units (8, 9), preferably by introducing a force into the narrow side.

13. Method for the discontinuous production of a laminate from a plurality of substrates in a hot press, comprising the following method steps:
- the supply of a substrate package (5) consisting of a plurality of substrates at a supply location (1),
- the pressing of the substrate package (5) in a hot press (2) to form a laminate (6) by means of pressure and heat,
- the cooling of the laminate (6) in a cooling press (3) and
- the deposition of the cooled laminate (6) at a storage location (4), wherein a transfer device (10) transports the substrate packages (5) and the laminates (6) between a supply location (1), the hot press (2), the cooling press (3) and the storage location (4), wherein at least one manipulating unit (8) of a first type is used for the substrate package (5) and manipulating units (9) of at least one further type are used for the laminates (6) in the transfer device (10), and wherein the manipulating units (8, 9) pick up, transport and deliver the substrate package (5) and the laminates (6) in the course of the transport.

14. Method according to a preceding method claim, **characterized in that** the laminates (6) are pushed out of the hot press (2) into the cooling press (3) or out of the cooling press (3) by means of slides, preferably over a sliding surface (7), most preferably over a sliding surface (7) with adhesion-reducing means or sliding bearings.

15. Method according to a preceding method claim, **characterized in that** one or more transfer carriages (12) are moved, preferably on rails (11), at least to transport the manipulating units (9) for the laminates between the hot press (2), cooling press (3) and storage location (4), preferably also for transporting the manipulating units (8) for the substrate packages (5) between the supply location (1) and the hot press (2).

16. Method according to a preceding method claim, **characterized in that** the transfer carriages (12) and/or the manipulating units (8, 9) of the transfer device (10) perform a common movement for transporting the substrate packages (5) and/or the laminates (6).

17. Method according to a preceding method claim, **characterized in that** means, preferably controlled drives and/or pneumatic cylinders with controlled pressure, are arranged on the manipulating units (8, 9), which are suitable for introducing tensile forces on the longitudinal sides of the substrate packages (5) and/or the laminates (6) transversely to the transport direction (13) in order to reduce or avoid sagging.

18. Method according to a preceding method claim, **characterized in that** the substrate package (5) and/or the laminate (6) are positioned longitudinally and/or transversely to the transport direction (13) by suitable means, wherein preferably these means are suitable for carrying out the positioning in the course of the movement in the transport direction (13), during the depositing and/or after the depositing.

19. Method according to a preceding method claim, **characterized in that** the substrate package and/or the laminate are monitored by a sensor system with respect to their position and/or are adjusted in their position and/or set in their position by actuators, wherein the actuators are preferably operatively connected in operative connection to the manipulating units (8, 9) and/or to the substrate packages (5) and/or to the laminates (6).

## Revendications

1. Dispositif pour la fabrication discontinue d'un stratifié composé de plusieurs substrats dans une presse chauffée, comprenant :
- un emplacement de mise à disposition (1) pour un paquet de substrats (5) composé de plusieurs substrats,
- une presse chauffée (2) pour presser un paquet de substrats (5) au moyen de pression et de chaleur afin d'obtenir un stratifié (6),
- une presse refroidie (3) pour le refroidissement du stratifié (6) et
- un emplacement d'entreposage (4) pour le stratifié (6),
dans lequel au moins un dispositif de transfert (10) est disposé, en vue du transport des paquets de substrats (5) et des stratifiés (6), entre l'emplacement de mise à disposition (1), la presse chauffée (2), la presse refroidie (3) et l'emplacement d'entreposage (4),
dans lequel une unité de manipulation (8) d'un premier type pour le paquet de substrats (5) et deux unités de manipulation (9) d'au moins un autre type pour les stratifiés (6) sont disposées dans le dispositif de transport (10) et dans lequel les unités de manipulation (8, 9) conviennent pour recueillir, transporter et déposer un paquet de substrats (5) et des stratifiés (6) au cours du transport.

2. Dispositif selon la revendication 1, **caractérisé en ce que** les unités de manipulation (8, 9) conviennent pour recueillir, transporter et/ou déposer en même temps un paquet de substrats (5) et deux stratifiés (6).

3. Dispositif selon au moins une des revendications précédentes, **caractérisé en ce que** des bandeaux de serrage sont disposés sur l'unité de manipulation (8) pour le paquet de substrats (5) et/ou des ventouses, des barres d'aspiration et/ou des coulisseaux ou des éléments coulissants sont disposés sur les unités de manipulation (9) pour les stratifiés (6).

4. Dispositif selon au moins une des revendications précédentes, **caractérisé en ce qu'**une surface de glissement, comportant de préférence des moyens réduisant l'adhérence ou des roulements, est disposée pour le transport ou la translation du stratifié (6) de la presse chauffée (2) dans la presse refroidie (3) ou de la presse refroidie (3) sur l'emplacement d'entreposage (4).

5. Dispositif selon au moins une des revendications précédentes, **caractérisé en ce qu'**un ou plusieurs chariots de transfert (12), de préférence sur rails, sont prévus, qui conviennent au moins pour le transport des unités de manipulation (9) pour les stratifiés entre la presse chauffée (2), la presse refroidie (3) et/ou l'emplacement d'entreposage (4), de préférence aussi pour le transport des unités de manipulation (8) pour les paquets de substrats (5) entre l'emplacement de mise à disposition (1) et la presse chauffée (2).

6. Dispositif selon la revendication 5, **caractérisé en ce que** les chariots de transfert (12) et/ou les unités de manipulation (8, 9) du dispositif de transport (10) conviennent pour le transport des paquets de substrats (5) et/ou des stratifiés (6) et exécutent un mouvement commun.

7. Dispositif selon au moins une des revendications précédentes, **caractérisé en ce que** sont disposés sur les unités de manipulation (8, 9) des moyens, de préférence des entraînements régulés et/ou des vérins pneumatiques à pression régulée, qui conviennent pour exercer des forces de traction sur les grands côtés des paquets de substrats (5) et/ou des stratifiés (6) dans le sens transversal par rapport au sens de transport (13) et pour éviter la formation d'une flèche.

8. Dispositif selon au moins une des revendications précédentes, **caractérisé en ce que** le dispositif de transport (10) convient pour transporter, au lieu d'un paquet de substrats (5) et d'un stratifié (6), au moins deux paquets de substrats (5) ou davantage et/ou au moins deux stratifiés (6) ou davantage à travers le dispositif dans le sens de production (13).

9. Dispositif selon au moins une des revendications précédentes, **caractérisé en ce que** des éléments de soutien, de préférence mobiles, sont disposés au niveau de dépassements des paquets de substrats (5), formés par une plus petite surface d'appui pour le côté plat des paquets de substrats (5), ou **en ce que** des unités de manipulation (8) disposées en dessous des paquets de substrats (5) soutiennent les paquets de substrats (5) au niveau des dépassements des paquets de substrats (5).

10. Dispositif selon au moins une des revendications précédentes, **caractérisé en ce que** des moyens pour le positionnement du paquet de substrats (5) et/ou du stratifié (6) sont disposés sur les unités de manipulation (8, 9) et/ou sur les chariots de transfert (12), longitudinalement et/ou transversalement par rapport au sens de transport (13), ces moyens convenant de préférence pour exécuter le positionnement pendant le mouvement dans le sens de transport (13), pendant ou après la dépose.

11. Dispositif selon la revendication 10, **caractérisé en ce que** les moyens pour le positionnement du paquet de substrats et/ou du stratifié comprennent une unité de capteur pour surveiller et/ou des éléments d'ajustement pour régler le placement et/ou la position, les éléments de déplacement étant de préférence disposés en liaison active avec les unités de manipulation (8, 9) et/ou sur les paquets de substrats (5) et/ou sur les stratifiés (6).

12. Dispositif selon la revendication 10 ou 11, **caractérisé en ce que** les moyens pour le réglage du placement et/ou de la position du paquet de substrats (5) et/ou du stratifié (6) retenu par les unités de manipulation (8, 9) comportent des éléments de déplacement qui conviennent pour déplacer le paquet de substrats (5) et/ou le stratifié (6) vis-à-vis des unités de manipulation (8, 9), de préférence par l'application d'une force dans le petit côté.

13. Procédé pour la fabrication discontinue d'un stratifié composé de plusieurs substrats dans une presse chauffée, comprenant les étapes suivantes :
- mise à disposition d'un paquet de substrats (5) composé de plusieurs substrats sur un emplacement de mise à disposition (1),
- pressage du paquet de substrats (5) dans une presse chauffée (2) pour former un stratifié (6) au moyen de pression et de chaleur,
- refroidissement du stratifié (6) dans une presse refroidie (3) et
- dépose du stratifié (6) refroidi sur un emplacement d'entreposage (4), un dispositif de transport (10) transportant les paquets de substrats (5) et les stratifiés (6) entre un emplacement de mise à disposition (1), la presse chauffée (2), la presse refroidie (3) et l'emplacement d'entreposage (4), au moins une unité de manipulation (8) d'un premier type pour le paquet de substrats (5) et des unités de manipulation (9) d'au moins un autre type pour les stratifiés (6) étant utilisées dans le dispositif de transport (10) et les unités de manipulation (8, 9) recueillant, transportant et déposant le paquet de substrats (5) et les stratifiés (6) au cours du transport.

14. Procédé selon une revendication de procédé précédente, **caractérisé en ce que** les stratifiés (6) sont poussés hors de la presse chauffée (2) dans la presse refroidie (3) ou hors de la presse refroidie (3) au moyen de coulisseaux, de préférence sur une surface de glissement (7), particulièrement sur une surface de glissement (7) comportant des moyens de réduire l'adhérence ou des paliers de glissement.

15. Procédé selon une revendication de procédé précédente, **caractérisé en ce qu'**un ou plusieurs chariots de transfert (12), de préférence sur rails (11), sont déplacés au moins pour le transport des unités de manipulation (9) pour les stratifiés entre la presse chauffée (2), la presse refroidie (3) et l'emplacement d'entreposage (4), de préférence aussi pour le transport des unités de manipulation (8) pour les paquets de substrats (5) entre l'emplacement de mise à disposition (1) et la presse chauffée (2).

16. Procédé selon une revendication de procédé précédente, **caractérisé en ce que** les chariots de transfert (12) et/ou les unités de manipulation (8, 9) du dispositif de transport (10) pour le transport des paquets de substrats (5) et/ou des stratifiés (6) exécutent un mouvement commun.

17. Procédé selon une revendication de procédé précédente, **caractérisé en ce que** sont disposés sur les unités de manipulation (8, 9) des moyens, de préférence des entraînements régulés et/ou des vérins pneumatiques à pression régulée, qui conviennent pour exercer des forces de traction sur les grands côtés des paquets de substrats (5) et/ou des stratifiés (6) transversalement par rapport au sens de transport (13) afin de réduire ou d'éviter la formation d'une flèche.

18. Procédé selon une revendication de procédé précédente, **caractérisé en ce que** le paquet de substrats (5) et/ou le stratifié (6) sont positionnés longitudinalement et/ou transversalement par rapport au sens de transport (13) par des moyens appropriés, ces moyens convenant de préférence pour exécuter le positionnement au cours du mouvement dans le sens de transport (13), pendant la dépose et/ou après la dépose.

19. Procédé selon une revendication de procédé précédente, **caractérisé en ce que** le placement et/ou la position du paquet de substrats et/ou du stratifié sont surveillés par une unité de capteur et/ou ajustés par des éléments de déplacement, les éléments de déplacement étant en liaison active avec les unités de manipulation (8, 9) et/ou sur les paquets de substrats (5) et/ou sur les stratifiés (6).
